# EUROPÄISCHE PATENTSCHRIFT

(11) **EP 3 812 053 B1**
(45) Veröffentlichungstag und Bekanntmachung des Hinweises auf die Patenterteilung: **11.06.2025**
(21) Anmeldenummer: 19205178.7
(22) Anmeldetag: 24.10.2019
(51) Int. Cl.: B08B 3/02, F16D 3/205, G05G 23/02, G05G 1/08, F16D 3/06

(54) **HOCHDRUCKREINIGER UND VERFAHREN ZUR MONTAGE EINES HOCHDRUCKREINIGERS**
HIGH PRESSURE CLEANER AND METHOD FOR MOUNTING SAME
APPAREIL DE NETTOYAGE HAUTE PRESSION ET PROCÉDÉ DE MONTAGE D'UN APPAREIL DE NETTOYAGE HAUTE PRESSION

(43) Veröffentlichungstag der Anmeldung: 28.04.2021
(73) Patentinhaber: Andreas Stihl AG & Co. KG, 71336 Waiblingen (DE)
(72) Erfinder: WEIK, Matthias, D-71332 Waiblingen (DE); TOST, Christopher, D-71549 Auenwald (DE)
(74) Vertreter: Karzel, Philipp

(56) Entgegenhaltungen:
- WO-A2-2012/119640
- JP-U- S5 289 642
- JP-U- S53 128 850
- US-A- 3 392 548

## Beschreibung

Die Erfindung betrifft einen Hochdruckreiniger nach dem Oberbegriff des Anspruchs 1 und ein Verfahren zur Montage eines Hochdruckreinigers.

Aus der WO 2012/119640 A2 ist ein Hochdruckreinigen nach dem Oberbegriff des Anspruchs 1 bekannt.

Mittels des Drehknopfes kann ein Betätigungselement gedreht werden. Die Drehachsen des Drehknopfes und des Betätigungselements sind koaxial zueinander angeordnet. Aus der JP S53-128850 U ist ein Kreuzgelenk bekannt, das zwei Wellen miteinander verbindet. Eine der beiden Wellen ist in ein erstes Teilstück und ein zweites Teilstück unterteilt. Am einen Ende des ersten Teilstücks ist das Kreuzgelenk angeordnet. Am anderen Ende des ersten Teilstücks ist das zweite Teilstück angeordnet, das in eine Aufnahme des ersten Teilstücks gesteckt ist und dadurch in Axialrichtung gegenüber dem ersten Teilstück verschiebbar ist.

Aus der JP S52-89642 U ist ein Kreuzgelenk bekannt, das zwei Wellen miteinander in Axialrichtung gegeneinander unverschieblich verbindet.

Aus der US 3,392,548 A ist ein Gleichlaufgelenk bekannt, das zwei Wellen miteinander in Axialrichtung gegeneinander unverschieblich verbindet.

Der Erfindung liegt die Aufgabe zugrunde, einen gattungsgemäßen Hochdruckreiniger derart weiterzubilden, dass eine versetzte Anordnung von Bedienelement und Betätigungselement zueinander möglich ist.

Diese Aufgabe wird durch einen Hochdruckreiniger mit den Merkmalen des Anspruchs 1 gelöst.

Eine weitere Aufgabe der Erfindung liegt darin, ein Verfahren zur Montage eines Hochdruckreinigers mit einem Bedienelement und einem Betätigungselement anzugeben, wobei das Bedienelement und das Betätigungselement über mindestens ein Kreuzgelenk drehfest miteinander verbunden werden sollen.

Diese Aufgabe wird durch ein Verfahren mit den Merkmalen des Anspruchs 17 gelöst.

Die Erfindung sieht vor, dass das Bedienelement und das Betätigungselement über mindestens ein Kreuzgelenk drehfest miteinander verbunden sind. Dadurch ist eine versetzte Anordnung von Bedienelement und Betätigungselement zueinander möglich. Die Drehachsen des Bedienelements und des Betätigungselements müssen nicht koaxial zueinander angeordnet sein, sondern können schräg zueinander liegen. Dadurch kann das Betätigungselement sich relativ zum Bedienelement bewegen und eine Betätigung des Betätigungselements über das Bedienelement weiterhin möglich sein. Dies kann beispielsweise vorteilhaft sein, wenn das Betätigungselement an einem vibrierenden Bauteil des Hochdruckreinigers, wie beispielsweise an einer Pumpe festgelegt ist.

Das mindestens eine Kreuzgelenk lässt eine Bewegung des Betätigungselements relativ zu dem Bedienelement in Richtung der Betätigungsdrehachse zu. Dadurch können von der Baueinheit aus Bedienelement und Betätigungselement unterschiedliche Abstände überbrückt werden. Ebenfalls ist es möglich, die beiden Endpunkte des Bedienelements und des Betätigungselements in zwei parallel zueinander verlaufenden Ebenen relativ zueinander zu verschieben und gleichzeitig eine Betätigung des Betätigungselements über das Bedienelement zu ermöglichen.

In vorteilhafter Weiterbildung der Erfindung ist vorgesehen, dass das Bedienelement und das Betätigungselement über zwei Kreuzgelenke drehfest miteinander verbunden sind. Insbesondere sind das Bedienelement und das Betätigungselement in einem in Richtung der Betätigungsdrehachse gemessenen Abstand zueinander angeordnet. Durch den Einsatz von zwei Kreuzgelenken können die Betätigungsdrehachse des Betätigungselements und eine Bediendrehachse des Bedienelements versetzt zueinander und gleichzeitig parallel zueinander angeordnet sein. Weiterhin ist es möglich, das Betätigungselement relativ zum Bedienelement, insbesondere in Richtung senkrecht zur Bediendrehachse anzuordnen, ohne dass das Bedienelement und das Betätigungselement dabei zueinander verkippt werden müssten.

Zweckmäßig ist zwischen dem Bedienelement und dem Betätigungselement ein Verbindungsstück angeordnet. Insbesondere sind die zwei Kreuzgelenke ein erstes Kreuzgelenk und ein zweites Kreuzgelenk. Vorteilhaft ist das erste Kreuzgelenk zwischen dem Bedienelement und dem Verbindungsstück ausgebildet, und das zweite Kreuzgelenk ist zwischen dem Betätigungselement und dem Verbindungsstück ausgebildet.

Zweckmäßig weist das Verbindungsstück zwei Bediengelenkzapfen auf. Vorteilhaft weist das Bedienelement für jeden Bediengelenkzapfen mindestens einen in Richtung der Betätigungsdrehachse zum Betätigungselement hin offenen Bedienaufnahmeschlitz zur Aufnahme des jeweiligen Bediengelenkzapfens auf. Dadurch können die Bediengelenkzapfen auch auf einfache Weise gelagert werden. Dadurch kann das erste Kreuzgelenk auf einfache Weise ausgebildet werden.

Zweckmäßig weist das Verbindungsstück zwei Betätigungsgelenkzapfen auf. Vorteilhaft weist das Betätigungselement für jeden Betätigungsgelenkzapfen mindestens einen in Richtung der Betätigungsdrehachse zum Bedienelement hin offenen Betätigungsaufnahmeschlitz zur Aufnahme des jeweiligen Betätigungsgelenkzapfens auf. Dadurch können die Betätigungsgelenkzapfen auf einfache Weise gelagert werden. Dadurch kann das zweite Kreuzgelenk auf einfache Weise ausgebildet werden.

In vorteilhafter Weiterbildung der Erfindung ist vorgesehen, dass das Bedienelement und das Betätigungselement derart zueinander beabstandet sind, dass das Verbindungsstück zwischen dem Bedienelement und dem Betätigungselement dadurch gehalten ist, dass die Bediengelenkzapfen innerhalb der Bedienaufnahmeschlitze angeordnet sind, und dass die Betätigungsgelenkzapfen innerhalb der Betätigungsaufnahmeschlitze angeordnet sind. Dadurch ist das Verbindungsstück auf einfache Weise zwischen dem Bedienelement und dem Betätigungselement gehalten. Gleichzeitig kann der Abstand so gewählt sein, dass das Verbindungsstück zwischen dem Bedienelement und dem Betätigungselement Bewegungsfreiraum hat.

Das Bedienelement und das Verbindungsstück bilden eine Baugruppe. In vorteilhafter Weiterbildung der Erfindung ist vorgesehen, dass die Baugruppe einen Einsatzzustand aufweist, in dem das Bedienelement und das Verbindungsstück gegeneinander beweglich sind, und dass die Baugruppe einen Montagezustand besitzt, in dem das erste Kreuzgelenk mittels einer lösbaren Rastverbindung zwischen dem Bedienelement und dem Verbindungsstück arretiert ist. Dadurch ist ein komfortabler Einbau der Baugruppe in den Hochdruckreiniger möglich. So kann die Baugruppe bei der Montage des Hochdruckreinigers im Montagezustand einfach mit dem Betätigungselement verbunden werden und anschließend in den Einsatzzustand überführt werden. Dadurch, dass die lösbare Rastverbindung zwischen dem Bedienelement und dem Verbindungsstück im Montagezustand arretiert ist, kann das Verbindungsstück durch Führung mittels des Bedienelements auf dem Betätigungselement platziert werden. Hierbei ist es möglich, dass die Baugruppe lediglich am Bedienelement angefasst wird. Aufgrund der Arretierung der Rastverbindung folgt das Verbindungsstück der Bewegung des Bedienelements so als wäre es starr mit dem Bedienelement verbunden.

Vorteilhaft ist die Baugruppe im Montagezustand derart arretiert, dass die Bediendrehachse des Bedienelements und eine Längsachse, entlang derer sich das Verbindungsstück erstreckt, koaxial zueinander liegen. Dadurch ist eine besonders einfache Führung des Verbindungsstücks mittels des Bedienelements möglich.

Das erste Kreuzgelenk weist insbesondere zwei Schwenkachsen auf, die jeweils durch einen der beiden Bediengelenkzapfen verlaufen. Zweckmäßig verhindert die Rastverbindung im Montagezustand ein Verschwenken des Verbindungsstücks gegenüber dem Bedienelement um die zwei Schwenkachsen des ersten Kreuzgelenks. Insbesondere besteht die Rastverbindung aus einem ersten Arretierungsmittel am Bedienelement und einem zweiten Arretierungsmittel am Verbindungsstück. Vorteilhaft ist vorgesehen, dass das erste Arretierungsmittel Vorsprünge am Rand der Bedienaufnahmeschlitze sind, zwischen denen im Montagezustand das als Eingriffsvorsprünge ausgebildete zweite Arretierungsmittel des Verbindungsstücks geklemmt gehalten ist.

Insbesondere ist vorgesehen, dass zur Aufnahme eines Bediengelenkzapfens für jeden Bediengelenkzapfen jeweils zwei Bedienaufnahmeschlitze vorgesehen sind, die in einer um eine Bediendrehachse umlaufenden Wand des Bedienelements angeordnet sind. Vorteilhaft sind in Umlaufrichtung um die Bediendrehachse abwechselnd solche Vorsprünge am Rand der Bedienaufnahmeschlitze vorgesehen, die eine Bewegung des Verbindungsstücks in Richtung der Bediendrehachse vom Bedienelement weg unterbinden und solche, die eine Bewegung des Verbindungsstücks in Richtung der Bediendrehachse auf das Bedienelement zu unterbinden.

Bevorzugt ist die Rastverbindung derart elastisch, dass die Baugruppe durch Drücken des Bedienelements in Richtung der Bediendrehachse auf das Verbindungsstück zu von dem Montagezustand in den Einsatzzustand überführbar ist. Dadurch ist eine Überführung der Baugruppe vom Montagezustand in den Einsatzzustand schnell und auf einfache Weise möglich.

Insbesondere ist das Betätigungselement zur Betätigung eines relativ zu dem Gehäuse beweglichen Bauteils des Hochdruckreinigers vorgesehen. Insbesondere bei Anordnung des Betätigungselements an einem relativ zum Gehäuse beweglichen Bauteil des Hochdruckreinigers ist das erfindungsgemäße Kreuzgelenk von großem Vorteil. Der Hochdruckreiniger kann dadurch derart gestaltet sein, dass das Bedienelement relativ zum Gehäuse des Hochdruckreinigers unverschiebbar gestaltet ist und mit diesem Bedienelement dennoch ein an dem beweglichen Bauteil des Hochdruckreinigers angeordnetes Betätigungselement betätigt werden kann.

In besonderer Ausgestaltung der Erfindung ist das Bauteil mittels eines Dämpfungselements gegenüber dem Gehäuse elastisch gelagert. Dadurch können Bewegungen des Bauteils abgedämpft werden. Insbesondere kann vorgesehen sein, dass das Bauteil eine Pumpe mit einem Motor ist. Zweckmäßig ist das Betätigungselement zur Betätigung einer Druckregulierung der Pumpe vorgesehen. Vorteilhaft ist das Betätigungselement an der Pumpe angeordnet.

Das erfindungsgemäße Verfahren zur Montage eines Hochdruckreinigers mit einer Baugruppe mit einem Einsatzzustand, in dem das Bedienelement und das Verbindungsstück gegeneinander beweglich sind, und mit einem Montagezustand, in dem das erste Kreuzgelenk mittels einer lösbaren Rastverbindung zwischen dem Bedienelement und dem Verbindungsstück arretiert ist, sieht vor, dass die Baugruppe aus Bedienelement und Verbindungsstück zunächst im Montagezustand durch eine Öffnung im Gehäuse des Hochdruckreinigers gesteckt wird. Anschließend wird das Verbindungsstück der Baugruppe bei Führung der Baugruppe über das Bedienelement in das Betätigungselement gesteckt. Dann wird das Bedienelement gegen das sich am Betätigungselement abstützende Verbindungsstück gedrückt, so dass hierbei die Baugruppe vom Montagezustand in den Einsatzzustand überführt wird. Abschließend wird das Bedienelement an dem Gehäuse des Hochdruckreinigers festgelegt. Durch dieses Montageverfahren kann das Verbindungsstück auf einfache Weise schnell und komfortabel mit dem Bedienelement verbunden werden. Dies kann werkzeuglos geschehen. Im Einsatzzustand der Baugruppe sind das Verbindungsstück und das Bedienelement bereits über das erste Kreuzgelenk miteinander verbunden. Hierfür ist kein gesonderter Montageschritt erforderlich.

Ein Ausführungsbeispiel der Erfindung wird im Folgenden anhand der Zeichnung erläutert. Es zeigen:
- Fig. 1: eine perspektivische Darstellung eines Hochdruckreinigers,
- Fig. 2: eine perspektivische, teilgeschnittene Darstellung des Hochdruckreinigers nach Fig. 1,
- Fig. 3: ein in Fig. 2 mit III bezeichnetes Detail,
- Fig. 4: eine Draufsicht auf das Bedienelement, das Verbindungsstück und das Betätigungselement in Fig. 2 in Richtung des in Fig. 2 mit IV bezeichneten Pfeils,
- Fig. 5: ein in Fig. 2 mit V bezeichnetes Detail,
- Fig. 6: ein in Fig. 5 mit VI bezeichnetes Detail,
- Fig. 7: ein in Fig. 5 mit VII bezeichnetes Detail,
- Fig. 8: eine perspektivische Darstellung einer Baugruppe aus dem Bedienelement und dem Verbindungsstück in einem Einsatzzustand,
- Fig. 9: eine perspektivische Darstellung der Baugruppe aus Fig. 8 in einem Montagezustand,
- Fig. 10 und 11: perspektivische Darstellungen des Verbindungsstücks aus den Figuren 8 und 9,
- Fig. 12: eine perspektivische Darstellung des Bedienelements,
- Fig. 13: eine Seitenansicht des Bedienelements aus Fig. 12.

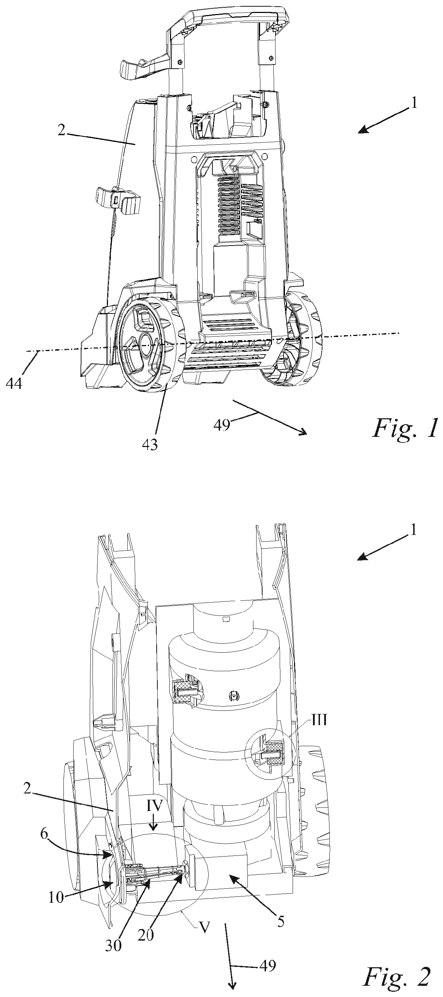

Fig. 1 zeigt einen Hochdruckreiniger 1 mit einem Gehäuse 2. Der Hochdruckreiniger 1 besitzt Räder 43, die um eine Drehachse 44 drehbar sind. Der Hochdruckreiniger 1 ist auf den Rädern 43 in eine Zugrichtung 49 ziehbar. Die Zugrichtung 49 verläuft senkrecht zur Drehachse 44.

Wie in Fig. 2 dargestellt, weist das Gehäuse 2 seitlich bezüglich der Zugrichtung 49 eine Öffnung 6 auf. In der Öffnung 6 ist ein Bedienelement 10 angeordnet. Das Bedienelement 10 ist drehbar in der Öffnung 6 gelagert. Das Bedienelement 10 dient zur Bedienung eines drehbaren Betätigungselements 20. Wie in der teilgeschnittenen Darstellung erkennbar, weist der Hochdruckreiniger 1 ein relativ zu dem Gehäuse 2 bewegliches Bauteil auf. Das bewegliche Bauteil ist eine Pumpe 5. Das Betätigungselement 20 dient zur Betätigung der Pumpe 5. Die Pumpe 5 besitzt einen nicht dargestellten Motor. Das Betätigungselement 20 dient zur Betätigung einer Druckregulierung der Pumpe 5. Das Betätigungselement 20 ist an der Pumpe 5 angeordnet.

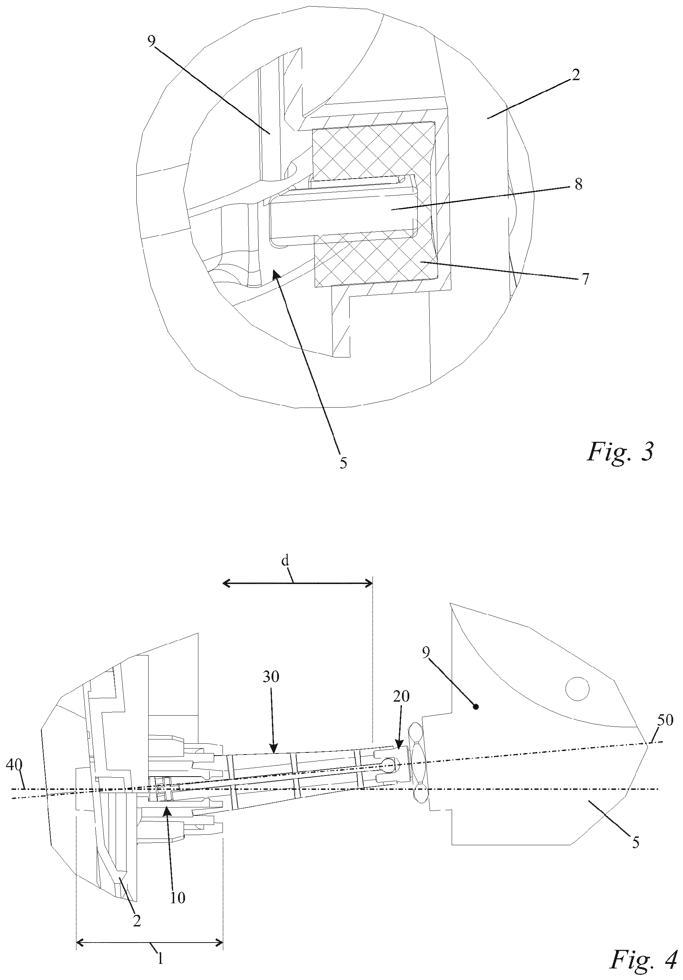

Wie in Fig. 3 dargestellt, ist die Pumpe 5 mittels eines Dämpfungselements 7 gegenüber dem Gehäuse 2 elastisch gelagert. Hierzu weist die Pumpe 5 einen Lagerungsfortsatz 8 auf. Der Lagerungsfortsatz 8 steht gegenüber einem Grundkörper 9 der Pumpe 5 vor. Der Lagerungsfortsatz 8 stützt sich über das Dämpfungselement 7 am Gehäuse 2 ab. Das Dämpfungselement 7 ist elastisch. Im Betrieb der Pumpe 5 dämpft das Dämpfungselement 7 die Übertragung von Vibrationen von der Pumpe 5 auf das Gehäuse 2.

Wie in Fig. 4 dargestellt, ist das Bedienelement 10 um eine Bediendrehachse 40 drehbar. Das Bedienelement 10 ist im Gehäuse 2 gelagert. Das Bedienelement 10 und das Betätigungselement 20 sind in einem in Richtung der Bediendrehachse 40 gemessenen Abstand d zueinander angeordnet. Das Bedienelement 10 besitzt eine in Richtung der Bediendrehachse 40 gemessene Länge l. Der Abstand d zwischen dem Bedienelement 10 und dem Betätigungselement 20 ist größer als die Länge l des Bedienelements 10.

Im Betrieb der Pumpe 5 treten Vibrationen der Pumpe 5 auf, die zu einer Bewegung der Pumpe 5 relativ zu dem Gehäuse 2 führen. Das Betätigungselement 20 ist am Grundkörper 9 der Pumpe 5 drehbar festgelegt. Das Betätigungselement 20 ist um die Betätigungsdrehachse 50 drehbar. Bei einer Vibration des Grundkörpers 9 der Pumpe 5 vibriert auch das Betätigungselement 20. Im Betrieb der Pumpe 5 bewegt sich das Betätigungselement 20 relativ zu dem Bedienelement 10. Aufgrund des Abstandes zwischen dem Bedienelement 10 und dem Betätigungselement 20 und der Vibrationen des Betätigungselements 20 während des Betriebs der Pumpe 5 ist eine starre Verbindung zwischen dem Bedienelement 10 und dem Betätigungselement 20 nur schwer zu realisieren. Wie in Fig. 4 dargestellt, sind das Bedienelement 10 und das Betätigungselement 20 über ein Verbindungsstück 30 miteinander verbunden.

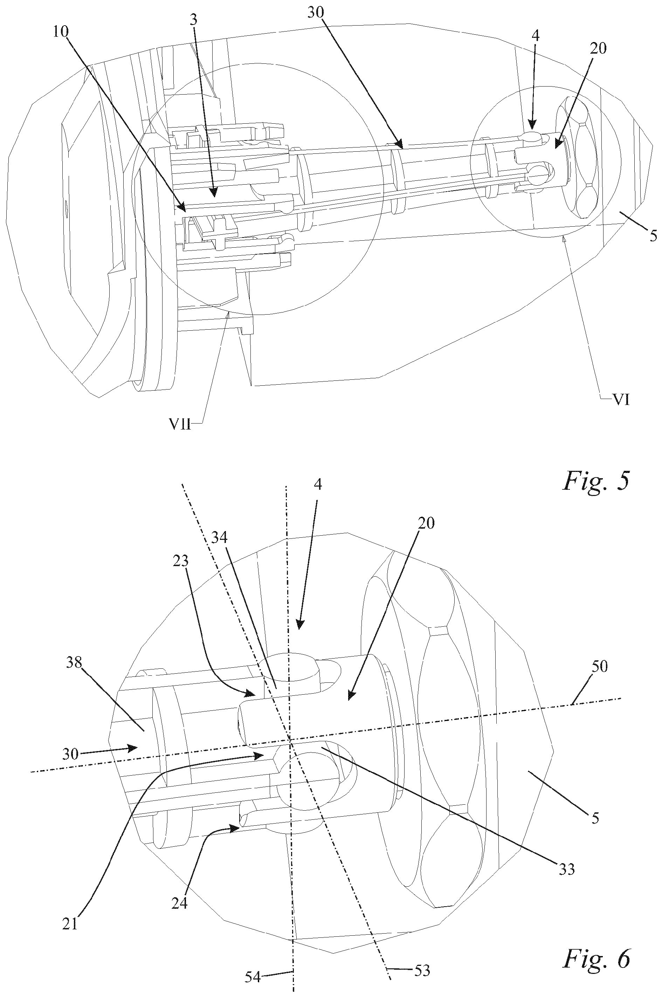

Wie in Fig. 5 dargestellt, sind das Bedienelement 10 und das Betätigungselement 20 über mindestens ein Kreuzgelenk 3, 4 drehfest miteinander verbunden. Im Ausführungsbeispiel sind das Bedienelement 10 und das Betätigungselement 20 über zwei Kreuzgelenke 3 und 4 drehfest miteinander verbunden. Zwischen dem Bedienelement 10 und dem Verbindungsstück 30 ist ein erstes Kreuzgelenk 3 ausgebildet. Zwischen dem Betätigungselement 20 und dem Verbindungsstück 30 ist ein zweites Kreuzgelenk 4 ausgebildet.

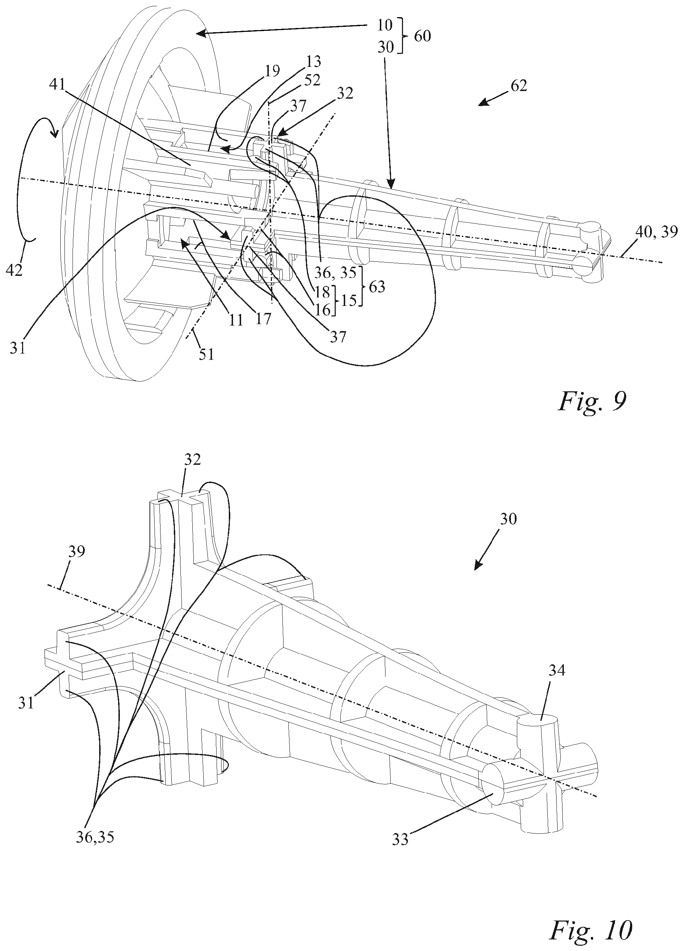

Das zweite Kreuzgelenk 4 ist in Fig. 6 im Detail dargestellt. Das Verbindungsstück 30 weist zwei Betätigungsgelenkzapfen 33 und 34 auf. Die Betätigungsgelenkzapfen 33 und 34 sind an einem dem Bedienelement 10 abgewandten Ende des Verbindungsstücks 30 angeordnet. Der erste Betätigungsgelenkzapfen 33 ist senkrecht zum zweiten Betätigungsgelenkzapfen 34 orientiert. Dies ist auch in Fig. 10 dargestellt. Wie in Fig. 6 erkennbar, ist der erste Betätigungsgelenkzapfen 33 um eine erste Betätigungsschwenkachse 53 schwenkbar in dem Betätigungselement 20 gelagert. Der zweite Betätigungsgelenkzapfen 34 ist um eine zweite Betätigungsschwenkachse 54 schwenkbar in dem Betätigungselement 20 gelagert. Der erste Betätigungsgelenkzapfen 33 erstreckt sich entlang der ersten Betätigungsschwenkachse 53. Der zweite Betätigungsgelenkzapfen 34 erstreckt sich entlang der zweiten Betätigungsschwenkachse 54. Die Betätigungsschwenkzapfen 33 und 34 sind fester Bestandteil des Verbindungsstücks 30. Die Betätigungsschwenkzapfen 33 und 34 sind einteilig mit einem Hauptkörper 38 des Verbindungsstücks 30 ausgebildet. Die erste Betätigungsschwenkachse 53 und die zweite Betätigungsschwenkachse 54 stehen immer senkrecht aufeinander.

Das Betätigungselement 20 weist für jeden Betätigungsgelenkzapfen 33, 34 mindestens einen Betätigungsaufnahmeschlitz 21, 22, 23, 24 zur Aufnahme des jeweiligen Betätigungsgelenkzapfens 33, 34 auf. Der mindestens eine Betätigungsaufnahmeschlitz 21, 22, 23, 24 ist in Richtung der Betätigungsdrehachse 50 zum Bedienelement 10 hin offen. Der mindestens eine Betätigungsaufnahmeschlitz 21, 22, 23, 24 ist U-förmig. Die Längsrichtung des U erstreckt sich in Richtung der Betätigungsdrehachse 50. Im Ausführungsbeispiel weist das Betätigungselement 20 für den ersten Betätigungsgelenkzapfen 33 den ersten Betätigungsaufnahmeschlitz 21 und den zweiten Betätigungsaufnahmeschlitz 22 (in Fig. 6 nicht dargestellt) auf. Der erste Betätigungsaufnahmeschlitz 21 und der zweite Betätigungsaufnahmeschlitz 22 erstrecken sich in einer gemeinsamen Ebene. Im Ausführungsbeispiel ist die gemeinsame Ebene des ersten Betätigungsaufnahmeschlitzes 21 und des zweiten Betätigungsaufnahmeschlitzes 22 eine Symmetrieebene des ersten Betätigungsaufnahmeschlitzes 21 und des zweiten Betätigungsaufnahmeschlitzes 22. Der erste Betätigungsaufnahmeschlitz 21 und der zweite Betätigungsaufnahmeschlitz 22 liegen einander bezüglich der Betätigungsdrehachse 50 gegenüber. Für den zweiten Betätigungsgelenkzapfen 34 weist das Betätigungselement 20 den dritten Betätigungsaufnahmeschlitz 23 und den vierten Betätigungsaufnahmeschlitz 24 auf. Der dritte Betätigungsaufnahmeschlitz 23 und der vierte Betätigungsaufnahmeschlitz 24 liegen in einer gemeinsamen Ebene. Im Ausführungsbeispiel ist die gemeinsame Ebene des dritten Betätigungsaufnahmeschlitzes 23 und des vierten Betätigungsaufnahmeschlitzes 24 eine Symmetrieebene des dritten Betätigungsaufnahmeschlitzes 23 und des vierten Betätigungsaufnahmeschlitzes 24. Die Ebene des ersten Betätigungsaufnahmeschlitzes 21 und des zweiten Betätigungsaufnahmeschlitzes 22 und die Ebene des dritten Betätigungsaufnahmeschlitzes 23 und des vierten Betätigungsaufnahmeschlitzes 24 stehen senkrecht aufeinander. Der dritte Betätigungsaufnahmeschlitz 23 und der vierte Betätigungsaufnahmeschlitz 24 liegen einander bezüglich der Betätigungsdrehachse 50 gegenüber.

Der erste Betätigungsgelenkzapfen 33 ist in den ersten Betätigungsaufnahmeschlitz 21 und in den zweiten Betätigungsaufnahmeschlitz 22 gesteckt. Die erste Betätigungsschwenkachse 53 liegt in der Ebene, in der sich der erste Betätigungsaufnahmeschlitz 21 und der zweite Betätigungsaufnahmeschlitz 22 erstrecken. Der zweite Betätigungsgelenkzapfen 34 ist in den dritten Betätigungsaufnahmeschlitz 23 und in den vierten Betätigungsaufnahmeschlitz 24 gesteckt. Die zweite Betätigungsschwenkachse 54 liegt in der Ebene, in der sich der dritte Betätigungsaufnahmeschlitz 23 und der vierte Betätigungsaufnahmeschlitz 24 erstrecken. Die Betätigungsaufnahmeschlitze 21, 22, 23 und 24 sind zu dem Bedienelement 10 hin offen. Das zweite Kreuzgelenk 4 umfasst die Betätigungsgelenkzapfen 33 und 34 und die Betätigungsaufnahmeschlitze 21, 22, 23 und 24. Das zweite Kreuzgelenk 4 lässt eine Bewegung des Betätigungselements 20 relativ zu dem Bedienelement 10 in Richtung der Betätigungsdrehachse 50 zu. Das zweite Kreuzgelenk 4 lässt eine Bewegung des Verbindungsstücks 30 relativ zu dem Betätigungselement 20 in Richtung der Betätigungsdrehachse 50 zu. Hierbei kann der erste Betätigungsgelenkzapfen 33 in den Betätigungsaufnahmeschlitzen 21 und 22 in der von den Betätigungsaufnahmeschlitzen 21 und 22 aufgespannten Ebene verschoben werden. Hierbei wird auch die erste Betätigungsschwenkachse 53 in der Ebene der Betätigungsaufnahmeschlitze 21 und 22 verschoben bzw. wird hierbei die von den Betätigungsaufnahmeschlitzen 21 und 22 aufgespannte, bezüglich der Betätigungsaufnahmeschlitze 21 und 22 ortsfeste Ebene relativ zu der ersten Betätigungsschwenkachse 53 verschoben, so dass die erste Betätigungsschwenkachse 53 an anderer Stelle in der von den Betätigungsaufnahmeschlitzen 21 und 22 aufgespannten Ebene zu liegen kommt. Ebenfalls ist eine Verschiebung des zweiten Betätigungsgelenkzapfens 34 in den Betätigungsaufnahmeschlitzen 23 und 24 möglich. In analoger Weise wird hierbei die zweite Betätigungsschwenkachse 54 in den Betätigungsaufnahmeschlitzen 23 und 24 verschoben. Die zweite Betätigungsschwenkachse 54 und die von den Betätigungsaufnahmeschlitzen 23 und 24 aufgespannte Ebene werden hierbei relativ zueinander verschoben, wobei die zweite Betätigungsschwenkachse 54 immer in der von den Betätigungsaufnahmeschlitzen 23 und 24 aufgespannten Ebene liegt. Durch diese Verschiebemöglichkeiten funktioniert das zweite Kreuzgelenk 4 auch bei Vibrationen bzw. Relativbewegungen des Betätigungselements 20 problemlos. Dadurch kann der in Fig. 4 dargestellte Abstand zwischen dem Bedienelement 10 und dem Betätigungselement 20 vergrößert oder verkleinert werden, ohne dass die Möglichkeit der Bedienung des Betätigungselements 20 über das Bedienelement 10 ausfällt.

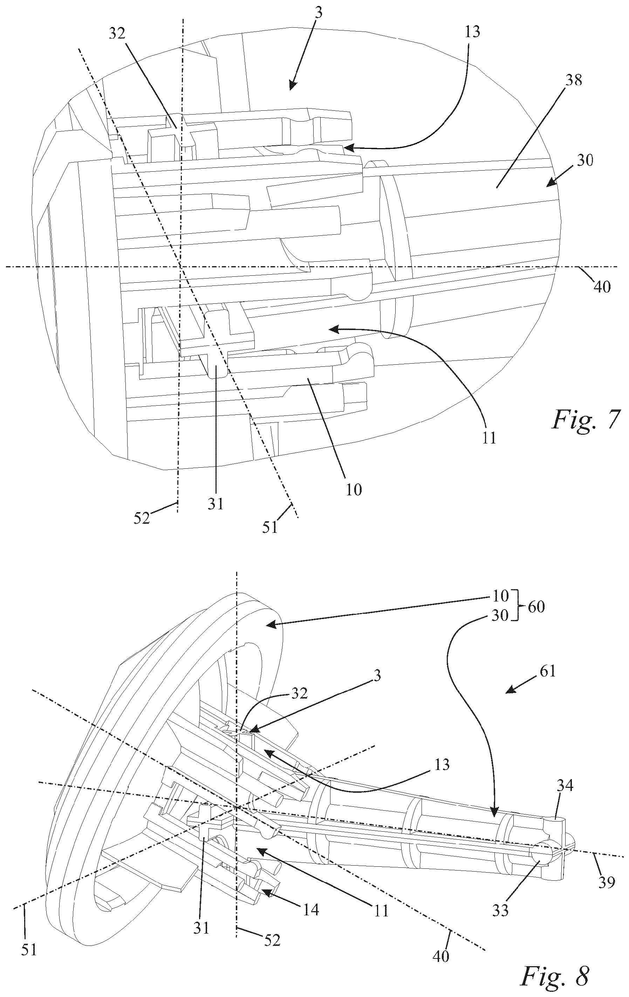

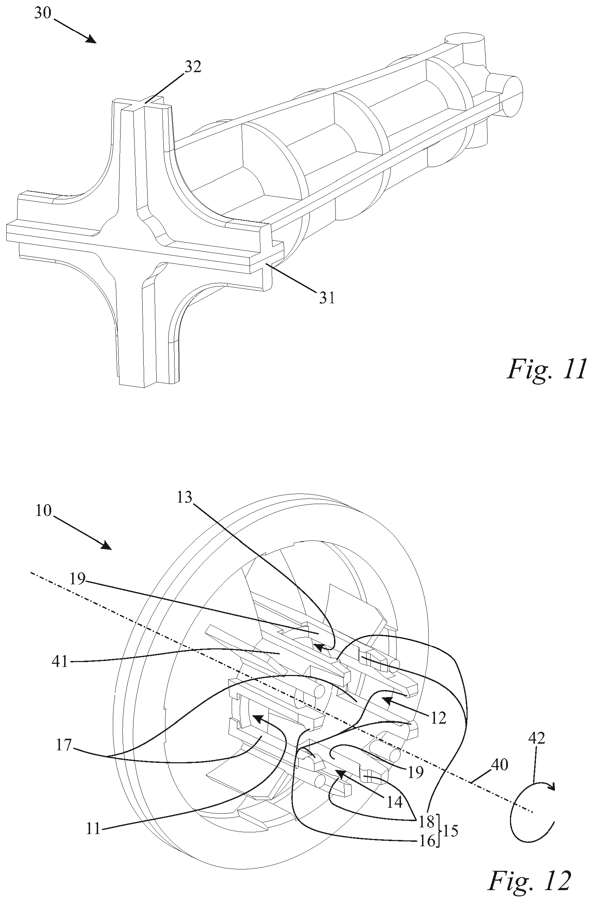

Das erste Kreuzgelenk 3 ist in Fig. 7 im Detail dargestellt. Das Verbindungsstück 30 weist zwei Bediengelenkzapfen 31 und 32 auf. Die Bediengelenkzapfen 31 und 32 sind an einem dem Betätigungselement 20 abgewandten Ende des Verbindungsstücks 30 angeordnet. Der erste Bediengelenkzapfen 31 ist senkrecht zum zweiten Bediengelenkzapfen 32 orientiert. Dies ist auch in Fig. 11 dargestellt. Wie in Fig. 7 erkennbar, ist der erste Bediengelenkzapfen 31 um eine erste Bedienschwenkachse 51 schwenkbar in dem Bedienelement 10 gelagert. Der zweite Bediengelenkzapfen 32 ist um eine zweite Bedienschwenkachse 52 schwenkbar in dem Bedienelement 10 gelagert. Der erste Bediengelenkzapfen 31 erstreckt sich entlang der ersten Bedienschwenkachse 51. Der zweite Bediengelenkzapfen 32 erstreckt sich entlang der zweiten Bedienschwenkachse 52. Die Bedienschwenkzapfen 31 und 32 sind fester Bestandteil des Verbindungsstücks 30. Die Bedienschwenkzapfen 31 und 32 sind einteilig mit einem Hauptkörper 38 des Verbindungsstücks 30 ausgebildet. Die erste Bedienschwenkachse 51 und die zweite Bedienschwenkachse 52 stehen immer senkrecht aufeinander.

Das Bedienelement 10 weist für jeden Bediengelenkzapfen 31, 32 mindestens einen Bedienaufnahmeschlitz 11, 12, 13, 14 zur Aufnahme des jeweiligen Bediengelenkzapfens 31, 32 auf. Der mindestens eine Bedienaufnahmeschlitz 11, 12, 13, 14 ist in Richtung der Bediendrehachse 40 zum Betätigungselement 20 hin offen. Der mindestens eine Bedienaufnahmeschlitz 11, 12, 13, 14 ist U-förmig. Die Längsrichtung des U erstreckt sich in Richtung der Bediendrehachse 40. Im Ausführungsbeispiel weist das Bedienelement 10 für den ersten Bediengelenkzapfen 31 den ersten Bedienaufnahmeschlitz 11 und den zweiten Bedienaufnahmeschlitz 12 (in Fig. 7 nicht dargestellt) auf. Der erste Bedienaufnahmeschlitz 11 und der zweite Bedienaufnahmeschlitz 12 erstrecken sich in einer gemeinsamen Ebene. Im Ausführungsbeispiel ist die gemeinsame Ebene des ersten Bedienaufnahmeschlitzes 11 und des zweiten Bedienaufnahmeschlitzes 12 eine Symmetrieebene des ersten Bedienaufnahmeschlitzes 11 und des zweiten Bedienaufnahmeschlitzes 12. Der erste Bedienaufnahmeschlitz 11 und der zweite Bedienaufnahmeschlitz 12 liegen einander bezüglich der Bediendrehachse 40 gegenüber. Für den zweiten Bediengelenkzapfen 32 weist das Bedienelement 10 den dritten Bedienaufnahmeschlitz 13 und den vierten Bedienaufnahmeschlitz 14 auf. Der dritte Bedienaufnahmeschlitz 13 und der vierte Bedienaufnahmeschlitz 14 liegen in einer gemeinsamen Ebene. Im Ausführungsbeispiel ist die gemeinsame Ebene des dritten Bedienaufnahmeschlitzes 13 und des vierten Bedienaufnahmeschlitzes 14 eine Symmetrieebene des dritten Bedienaufnahmeschlitzes 13 und des vierten Bedienaufnahmeschlitzes 14. Die Ebene des ersten Bedienaufnahmeschlitzes 11 und des zweiten Bedienaufnahmeschlitzes 12 und die Ebene des dritten Bedienaufnahmeschlitzes 13 und des vierten Bedienaufnahmeschlitzes 14 stehen senkrecht aufeinander. Der dritte Bedienaufnahmeschlitz 13 und der vierte Bedienaufnahmeschlitz 14 liegen einander bezüglich der Bediendrehachse 40 gegenüber.

Der erste Bediengelenkzapfen 31 ist in den ersten Bedienaufnahmeschlitz 11 und in den zweiten Bedienaufnahmeschlitz 12 gesteckt. Die erste Bedienschwenkachse 51 liegt in der Ebene, in der sich der erste Bedienaufnahmeschlitz 11 und der zweite Bedienaufnahmeschlitz 12 erstrecken. Der zweite Bediengelenkzapfen 32 ist in den dritten Bedienaufnahmeschlitz 13 und in den vierten Bedienaufnahmeschlitz 14 gesteckt. Die zweite Bedienschwenkachse 52 liegt in der Ebene, in der sich der dritte Bedienaufnahmeschlitz 13 und der vierte Bedienaufnahmeschlitz 14 erstrecken. Die Bedienaufnahmeschlitze 11, 12, 13 und 14 sind zu dem Betätigungselement 20 hin offen. Das erste Kreuzgelenk 3 umfasst die Bediengelenkzapfen 31 und 32 und die Bedienaufnahmeschlitze 11, 12, 13 und 14. Das erste Kreuzgelenk 2 lässt eine Bewegung des Betätigungselements 20 relativ zu dem Bedienelement 10 in Richtung der Bediendrehachse 40 zu. Das erste Kreuzgelenk 3 lässt eine Bewegung des Verbindungsstücks 30 relativ zu dem Bedienelement 10 in Richtung der Bediendrehachse 40 zu. Hierbei kann der erste Bediengelenkzapfen 31 in den Bedienaufnahmeschlitzen 11 und 12 in der von den Bedienaufnahmeschlitzen 11 und 12 aufgespannten Ebene verschoben werden. Hierbei wird auch die erste Bedienschwenkachse 51 in der Ebene der Bedienaufnahmeschlitze 11 und 12 verschoben bzw. wird hierbei die von den Bedienaufnahmeschlitzen 11 und 12 aufgespannte, bezüglich der Bedienaufnahmeschlitze 11 und 12 ortsfeste Ebene relativ zu der ersten Bedienschwenkachse 51 verschoben, so dass die erste Bedienschwenkachse 51 an anderer Stelle in der von den Bedienaufnahmeschlitzen 11 und 12 aufgespannten Ebene zu liegen kommt. Ebenfalls ist eine Verschiebung des zweiten Bediengelenkzapfens 32 in den Bedienaufnahmeschlitzen 13 und 14 möglich. In analoger Weise wird hierbei die zweite Bedienschwenkachse 52 in den Bedienaufnahmeschlitzen 13 und 14 verschoben. Die zweite Bedienschwenkachse 52 und die von den Bedienaufnahmeschlitzen 13 und 14 aufgespannte Ebene werden hierbei relativ zueinander verschoben, wobei die zweite Bedienschwenkachse 52 immer in der von den Bedienaufnahmeschlitzen 13 und 14 aufgespannten Ebene liegt. Durch diese Verschiebemöglichkeiten funktioniert das erste Kreuzgelenk 3 auch bei Vibrationen bzw. Relativbewegungen des Betätigungselements 20 bzw. des Verbindungsstücks 30 problemlos. Dadurch kann der in Fig. 4 dargestellte Abstand zwischen dem Bedienelement 10 und dem Betätigungselement 20 vergrößert oder verkleinert werden, ohne dass die Möglichkeit der Bedienung des Betätigungselements 20 über das Bedienelement 10 ausfällt.

Wie in Fig. 4 dargestellt, ist der Abstand zwischen dem Bedienelement 10 und dem Betätigungselement 20 derart, dass das Verbindungsstück 30 zwischen dem Bedienelement 10 und dem Betätigungselement 20 dadurch gehalten ist, dass die Bediengelenkzapfen 31 und 32 innerhalb der Bedienaufnahmeschlitze 11, 12, 13 und 14 angeordnet sind, und dass die Betätigungsgelenkzapfen 33 und 34 innerhalb der Betätigungsaufnahmeschlitze 21, 22, 23 und 24 angeordnet sind. Der Abstand d zwischen dem Bedienelement 10 und dem Betätigungselement 20 ist derart gewählt, dass eine Relativbewegung des Betätigungselements 20 gegenüber dem Bedienelement 10 in Richtung der Bediendrehachse 40 in einem bestimmten Bewegungsspielraum möglich ist, und dass gleichzeitig weder die Bediengelenkzapfen 31 und 32 aus den Bedienaufnahmeschlitzen 11, 12, 13 und 14 noch die Betätigungsgelenkzapfen 33 und 34 aus den Betätigungsaufnahmeschlitzen 21, 22, 23 und 24 herausrutschen können. Dadurch ist der Ausgleich von Vibrationsbewegungen der Pumpe 5 durch die Kreuzgelenke 3 und 4 möglich. Gleichzeitig ist dabei eine Bedienung des Betätigungselements 20 über das Bedienelement 10 möglich.

Der Bewegungsspielraum ist so groß, dass der in Richtung der Bediendrehachse 40 gemessene maximal mögliche Abstand zwischen dem Bedienelement 10 und dem Betätigungselement 20 mindestens 110% des in Richtung der Bediendrehachse 40 gemessenen minimal möglichen Abstands zwischen dem Bedienelement 10 und dem Betätigungselement 20 beträgt. Der Bewegungsspielraum ist so groß, dass der maximal mögliche Abstand zwischen dem Bedienelement 10 und dem Betätigungselement 20 höchstens 130% des minimal möglichen Abstands zwischen dem Bedienelement 10 und dem Betätigungselement 20 beträgt.

Fig. 8 zeigt das Bedienelement 10 und das Verbindungsstück 30. Das Verbindungsstück 30 ist in das Bedienelement 10 gesteckt. Das Verbindungsstück 30 ist mit seinen Bediengelenkzapfen 31 und 32 in die Bedienaufnahmeschlitze 11, 12, 13 und 14 des Bedienelements 10 gesteckt. Das Bedienelement 10 und das Verbindungsstück 30 bilden eine Baugruppe 60. In Fig. 8 befindet sich die Baugruppe 60 in einem Einsatzzustand 61. Im Einsatzzustand 61 sind das Bedienelement 10 und das Verbindungsstück 30 gegeneinander beweglich. Das Verbindungsstück 30 besitzt eine Längsachse 39. Das Verbindungsstück 30 erstreckt sich entlang der Längsachse 39. Im Einsatzzustand 61 kann die Längsachse 39 des Verbindungsstücks 30 gegenüber der Bediendrehachse 40 des Bedienelements 10 verkippt sein. Im Einsatzzustand 61 ist ein Schwenken des Verbindungsstücks 30 um mindestens eine der Bedienschwenkachsen 51 und 52 möglich.

Fig. 9 zeigt die Baugruppe 60 in einem Montagezustand 62. Im Montagezustand 62 ist das erste Kreuzgelenk 3 mittels einer lösbaren Rastverbindung 63 arretiert. Die Rastverbindung 63 ist im Montagezustand 62 zwischen dem Bedienelement 10 und dem Verbindungsstück 30 ausgebildet. Im Montagezustand 62 bilden das Bedienelement 10 und das Verbindungsstück 30 eine starre Einheit. Im Montagezustand 62 ist ein Verschwenken des Verbindungsstücks 30 relativ zum Bedienelement 10 um eine der Bedienschwenkachsen 51 oder 52 unmöglich. Im Montagezustand 62 ist die Baugruppe 60 derart arretiert, dass die Bediendrehachse 40 des Bedienelements 10 und die Längsachse 39 des Verbindungsstücks 30 koaxial zueinander liegen. Im Montagezustand 62 verhindert die Rastverbindung 63 ein Verschwenken des Verbindungsstücks 30 gegenüber dem Bedienelement 10 um die beiden Bedienschwenkachsen 51 und 52 des ersten Kreuzgelenks 3.

Die Rastverbindung 63 besteht aus einem ersten Arretierungsmittel 15 und einem zweiten Arretierungsmittel 35. Das erste Arretierungsmittel 15 ist Bestandteil des Bedienelements 10. Das zweite Arretierungsmittel 35 ist Bestandteil des Verbindungsstücks 30. Im Ausführungsbeispiel umfasst das erste Arretierungsmittel 15 mehrere Bauteile. Das erste Arretierungsmittel 15 sind Vorsprünge 16 und 18 an einem Rand 17, 19 der Bedienaufnahmeschlitze 11, 12, 13 und 14. Der erste Bedienaufnahmeschlitz 11 und der zweite Bedienaufnahmeschlitz 12 weisen jeweils einen Rand 17 auf. Die Ränder 17 des ersten Bedienaufnahmeschlitzes 11 und des zweiten Bedienaufnahmeschlitzes 12 sind getrennt voneinander ausgebildet. Der dritte Bedienaufnahmeschlitz 13 und der vierte Bedienaufnahmeschlitz 14 weisen jeweils einen Rand 19 auf. Die Ränder 19 des dritten Bedienaufnahmeschlitzes 13 und des vierten Bedienaufnahmeschlitzes 14 sind getrennt voneinander ausgebildet. Der Rand 17 und der Rand 19 besitzen eine im Wesentlichen U-förmige Form. Die Öffnung der U-Form zeigt zum Verbindungsstück 30 hin.

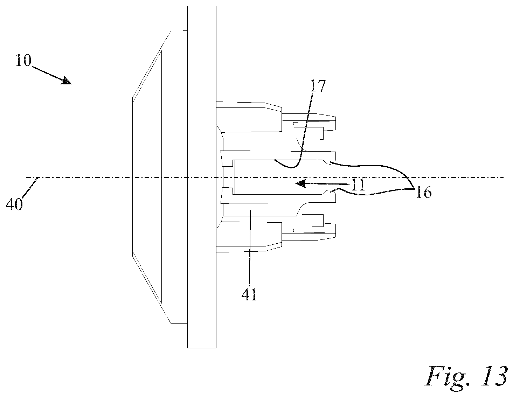

Die Vorsprünge 16 stehen in Richtung senkrecht zur Bediendrehachse 40 über die Ränder 17 der Bedienaufnahmeschlitze 11 und 12 hervor. Jeder der Bedienaufnahmeschlitze 11 und 12 besitzt zwei Vorsprünge 16. Die beiden Vorsprünge 16 eines Bedienaufnahmeschlitzes 11, 12 sind einander gegenüberliegend angeordnet. Dies ist auch in Fig. 13 dargestellt. Die beiden Vorsprünge 16 eines Bedienaufnahmeschlitzes 11, 12 liegen bezüglich der Richtung der Bediendrehachse 40 auf der gleichen Höhe.

Wie in Fig. 9 dargestellt, stehen die Vorsprünge 18 in Richtung senkrecht zur Bediendrehachse 40 über die Ränder 19 der Bedienaufnahmeschlitze 13 und 14 hervor. Jeder der Bedienaufnahmeschlitze 13 und 14 besitzt jeweils zwei Vorsprünge 18. Die Vorsprünge 18 liegen einander gegenüber. Die Vorsprünge 18 liegen bezüglich der Richtung der Bediendrehachse 40 auf der gleichen Höhe.

Das zweite Arretierungsmittel 35 umfasst mehrere Bauteile. Das zweite Arretierungsmittel 35 sind Eingriffsvorsprünge 36. Die Eingriffsvorsprünge 36 sind Bestandteil der beiden Bediengelenkzapfen 31 und 32. Die Bediengelenkzapfen 31 und 32 weisen jeweils einen Grundkörper 37 auf. Die Eingriffsvorsprünge 36 stehen in Richtung senkrecht zur Längsachse 39 des Verbindungsstücks 30 über den Grundkörper 37 der Bediengelenkzapfen 31 und 32 hervor.

Im Montagezustand 62 ist das erste Arretierungsmittel 15 im zweiten Arretierungsmittel 35 geklemmt gehalten. Im Montagezustand 62 sind die Eingriffsvorsprünge 36 des Verbindungsstücks 30 zwischen den Vorsprüngen 16 und 18 am Rand 17, 19 der Bedienaufnahmeschlitze 11, 12, 13 und 14 geklemmt gehalten.

Das Bedienelement 10 weist eine um die Bediendrehachse 40 umlaufende Wand 41 auf. Die Bedienaufnahmeschlitze 11, 12, 13 und 14 sind in der Wand 41 angeordnet. In Umlaufrichtung 42 um die Bediendrehachse 40 sind am Rand 17, 19 der Bedienaufnahmeschlitze 11, 12, 13, 14 abwechselnd solche Vorsprünge 16 vorgesehen, die im Montagezustand 62 eine Bewegung des Verbindungsstücks 30 in Richtung der Bediendrehachse 40 vom Bedienelement 10 weg unterbinden und solche Vorsprünge 18, die im Montagezustand 62 eine Bewegung des Verbindungsstücks 30 in Richtung der Bediendrehachse 40 auf das Bedienelement 10 zu unterbinden. Wie in Fig. 9 dargestellt, unterbinden die Vorsprünge 16 am Rand 17 des ersten Bedienaufnahmeschlitzes 11 eine Bewegung der Eingriffsvorsprünge 36 des ersten Bediengelenkzapfens 31 in Richtung weg vom Bedienelement 10. Die Vorsprünge 18 am Rand 19 des dritten Bedienaufnahmeschlitzes 13 unterbinden eine Bewegung der Eingriffsvorsprünge 36 des zweiten Bediengelenkzapfens 32 in Richtung auf das Bedienelement 10 zu.

Das Verbindungsstück 30 ist im Montagezustand 62 der Baugruppe 60 bezüglich der Richtung der Bediendrehachse 40 zwischen den Vorsprüngen 16 des ersten Bedienaufnahmeschlitzes 11 und den Vorsprüngen 18 des dritten Bedienaufnahmeschlitzes geklemmt gehalten. Die Vorsprünge 16 des ersten Bedienaufnahmeschlitzes 11 und die Vorsprünge 18 des dritten Bedienaufnahmeschlitzes 13 sind bezüglich der Richtung der Bediendrehachse 40 in einem Abstand zueinander angeordnet, der einer in Richtung der Längsachse 39 des Verbindungsstücks 30 gemessenen Breite der Eingriffsvorsprünge 36 der Bediengelenkzapfen 31 und 32 entspricht. Dasselbe gilt für die in Fig. 12 dargestellten Vorsprünge 16 des zweiten Bedienaufnahmeschlitzes 12 und die Vorsprünge 18 des vierten Bedienaufnahmeschlitzes 14.

Die Rastverbindung 63 ist derart elastisch, dass die Baugruppe 60 durch Drücken des Bedienelements 10 in Richtung der Bediendrehachse 40 auf das Verbindungsstück 30 zu von dem in Fig. 9 gezeigten Montagezustand 62 in den in Fig. 8 gezeigten Einsatzzustand überführbar ist. Die Vorsprünge 18, die im Montagezustand 62 eine Bewegung des Verbindungsstücks 30 in Richtung auf das Bedienelement zu unterbinden, sind an ihrer dem Verbindungsstück 30 zugewandten Seite in Richtung der Bediendrehachse 40 abgerundet. Dadurch werden die Bedienaufnahmeschlitze 11 und 12 im Montagezustand 62 aufgeweitet, wenn das Bedienelement 10 gegen das Verbindungsstück 30 in Richtung der Bediendrehachse 40 gedrückt wird. Das Bedienelement 10 wird dabei dem Verbindungsstück 30 angenähert, so dass die Bediengelenkzapfen 31 und 32 tiefer in die Bedienaufnahmeschlitze 11, 12, 13 und 14 gelangen. In diesem Bereich der Bedienaufnahmeschlitze 11, 12, 13 und 14 sind die Eingriffsvorsprünge 36 der Bediengelenkzapfen 31 und 32 nicht mehr zwischen den Vorsprüngen 16 und 18 eingeklemmt. Die Rastverbindung 62 ist gelöst, und die Baugruppe 60 befindet sich im Einsatzzustand 61.

Bei der Montage des Hochdruckreinigers 1 müssen das Bedienelement 10, das Verbindungsstück 30 und das Betätigungselement 20 miteinander verbunden werden, so dass der in Fig. 5 dargestellte Zustand erreicht wird. Hierbei müssen die in Fig. 6 dargestellten Betätigungsgelenkzapfen 33 und 34 in die Betätigungsaufnahmeschlitze 21, 22, 23 und 24 des Betätigungselements 20 eingesteckt werden. Hierzu muss das Verbindungsstück 30 durch die vergleichsweise kleine Öffnung 6 (Fig. 2) im Gehäuse 2 des Hochdruckreinigers 1 eingeführt werden. Da das Verbindungsstück 30 kürzer ist als der Abstand zwischen dem Gehäuse 2 und dem Betätigungselement 20, muss das Verbindungsstück 30 hierbei vollständig durch die Öffnung 6 geführt werden (Fig. 4). Um den Einsatz eines Werkzeugs oder die Erforderlichkeit großen Geschicks zu vermeiden, wird hierbei wie folgt vorgegangen: Die Baugruppe 60 aus Bedienelement 10 und Verbindungsstück 30 wird zunächst im Montagezustand 62 (Fig. 9) durch die Öffnung 6 im Gehäuse 2 des Hochdruckreinigers 1 gesteckt. Anschließend wird das Verbindungsstück 30 der Baugruppe 60 bei Führung der Baugruppe 60 über das Bedienelement 10 in das Betätigungselement 20 gesteckt. Hierbei muss lediglich das Bedienelement 10 mit der Hand geführt werden. Das Verbindungsstück 30 folgt den Bewegungen des Bedienelements 10 aufgrund der arretierten Rastverbindung 63. Dadurch ist ein Treffen der Betätigungsaufnahmeschlitze 21, 22, 23 und 24 des Betätigungselements 20 (Fig. 6) mit den Betätigungsgelenkzapfen 33 und 34 des Verbindungsstücks 30 schnell, präzise und einfach möglich. Durch die Platzierung des Verbindungsstücks 30 in dem Betätigungselement 20 ist das zweite Kreuzgelenk 4 ausgebildet. Eine Drehbewegung des Verbindungsstücks 30 bewirkt eine Drehbewegung des Betätigungselements 20. Nachdem das Verbindungsstück 30 in das Betätigungselement 20 gesteckt ist, wird das Bedienelement 10 gegen das sich am Betätigungselement 20 abstützende Verbindungsstück 30 gedrückt, so dass hierbei die Baugruppe 60 vom Montagezustand 62 in den Einsatzzustand 61 (Fig. 8) überführt wird. Dadurch ist das erste Kreuzgelenk 3 einsatzbereit. Das Verbindungsstück 30 ist gegenüber dem Bedienelement 10 beweglich. Eine Drehbewegung des Bedienelements 10 um die Bediendrehachse 40 hat eine Drehbewegung des Verbindungsstücks 30 zur Folge. Abschließend wird das Bedienelement 10 an dem Gehäuse 2 des Hochdruckreinigers 1 festgelegt (Fig. 2).

## Patentansprüche

1. Hochdruckreiniger mit einem drehbar an einem Gehäuse (2) des Hochdruckreinigers (1) angeordneten Bedienelement (10) zur Bedienung eines um eine Betätigungsdrehachse (50) drehbaren Betätigungselements (20),
**dadurch gekennzeichnet, dass** das Bedienelement (10) und das Betätigungselement (20) über mindestens ein Kreuzgelenk (3, 4) drehfest miteinander verbunden sind, und dass das mindestens eine Kreuzgelenk (3, 4) eine Bewegung des Betätigungselements (20) relativ zu dem Bedienelement (10) in Richtung der Betätigungsdrehachse (50) zulässt.

2. Hochdruckreiniger nach Anspruch 1,
**dadurch gekennzeichnet, dass** das Bedienelement (10) und das Betätigungselement (20) in einem in Richtung der Bediendrehachse (40) gemessenen Abstand (d) zueinander angeordnet sind, und dass das Bedienelement (10) und das Betätigungselement (20) über zwei Kreuzgelenke (3, 4) drehfest miteinander verbunden sind.

3. Hochdruckreiniger nach Anspruch 2,
**dadurch gekennzeichnet, dass** zwischen dem Bedienelement (10) und dem Betätigungselement (20) ein Verbindungsstück (30) angeordnet ist, dass die zwei Kreuzgelenke (3, 4) ein erstes Kreuzgelenk (3) und ein zweites Kreuzgelenk (4) sind, dass das erste Kreuzgelenk (3) zwischen dem Bedienelement (10) und dem Verbindungsstück (30) ausgebildet ist, und dass das zweite Kreuzgelenk (4) zwischen dem Betätigungselement (20) und dem Verbindungsstück (30) ausgebildet ist.

4. Hochdruckreiniger nach Anspruch 3,
**dadurch gekennzeichnet, dass** das Verbindungsstück (30) zwei Bediengelenkzapfen (31, 32) aufweist, und dass das Bedienelement (10) für jeden Bediengelenkzapfen (31, 32) mindestens einen in Richtung der Betätigungsdrehachse (50) zum Betätigungselement (20) hin offenen Bedienaufnahmeschlitz (11, 12, 13, 14) zur Aufnahme des jeweiligen Bediengelenkzapfens (31, 32) aufweist.

5. Hochdruckreiniger nach Anspruch 3 oder 4,
**dadurch gekennzeichnet, dass** das Verbindungsstück (30) zwei Betätigungsgelenkzapfen (33, 34) aufweist, und dass das Betätigungselement (20) für jeden Betätigungsgelenkzapfen (33, 34) mindestens einen in Richtung der Betätigungsdrehachse (50) zum Bedienelement (10) hin offenen Betätigungsaufnahmeschlitz (21, 22, 23, 24) zur Aufnahme des jeweiligen Betätigungsgelenkzapfens (33, 34) aufweist.

6. Hochdruckreiniger nach Anspruch 5,
**dadurch gekennzeichnet, dass** das Bedienelement (10) und das Betätigungselement (30) derart zueinander beabstandet sind, dass das Verbindungsstück (30) zwischen dem Bedienelement (10) und dem Betätigungselement (30) dadurch gehalten ist, dass die Bediengelenkzapfen (31, 32) innerhalb der Bedienaufnahmeschlitze (11, 12, 13, 14) angeordnet sind, und dass die Betätigungsgelenkzapfen (33, 34) innerhalb der Betätigungsaufnahmeschlitze (21, 22, 23, 24) angeordnet sind.

7. Hochdruckreiniger nach einem der Ansprüche 3 bis 6,
**dadurch gekennzeichnet, dass** das Bedienelement (10) und das Verbindungsstück (30) eine Baugruppe (60) bilden, dass die Baugruppe (60) einen Einsatzzustand (61) aufweist, in dem das Bedienelement (10) und das Verbindungsstück (30) gegeneinander beweglich sind, dass die Baugruppe (60) einen Montagezustand (62) besitzt, in dem das erste Kreuzgelenk (3) mittels einer lösbaren Rastverbindung (63) zwischen dem Bedienelement (10) und dem Verbindungsstück (30) arretiert ist.

8. Hochdruckreiniger nach Anspruch 7,
**dadurch gekennzeichnet, dass** die Baugruppe (60) im Montagezustand (62) derart arretiert ist, dass die Bediendrehachse (40) des Bedienelements (10) und eine Längsachse (39), entlang derer sich das Verbindungsstück (30) erstreckt, koaxial zueinander liegen.

9. Hochdruckreiniger nach Anspruch 7 oder 8,
**dadurch gekennzeichnet, dass** das erste Kreuzgelenk (3) zwei Bedienschwenkachsen (51, 52) aufweist, die jeweils durch einen der beiden Bediengelenkzapfen (31, 32) verlaufen, und dass die Rastverbindung (63) im Montagezustand (62) ein Verschwenken des Verbindungsstücks (30) gegenüber dem Bedienelement (10) um die zwei Bedienschwenkachsen (51, 52) des ersten Kreuzgelenks (3) verhindert.

10. Hochdruckreiniger nach einem der Ansprüche 7 bis 9,
**dadurch gekennzeichnet, dass** die Rastverbindung (63) aus einem ersten Arretierungsmittel (15) am Bedienelement (10) und einem zweiten Arretierungsmittel (35) am Verbindungsstück (30) besteht.

11. Hochdruckreiniger nach Anspruch 10,
**dadurch gekennzeichnet, dass** das erste Arretierungsmittel (15) Vorsprünge (16, 18) am Rand (17, 19) der Bedienaufnahmeschlitze (11, 12, 13, 14) sind, zwischen denen im Montagezustand (62) das als Eingriffsvorsprünge (36) ausgebildete zweite Arretierungsmittel (35) des Verbindungsstücks (30) geklemmt gehalten ist.

12. Hochdruckreiniger einem der Ansprüche 7 bis 11,
**dadurch gekennzeichnet, dass** die Rastverbindung (63) derart elastisch ist, dass die Baugruppe (60) durch Drücken des Bedienelements (10) in Richtung der Bediendrehachse (40) auf das Verbindungsstück (30) von dem Montagezustand (62) in den Einsatzzustand (61) überführbar ist.

13. Hochdruckreiniger nach einem der Ansprüche 1 bis 12,
**dadurch gekennzeichnet, dass** das Betätigungselement (20) zur Betätigung eines relativ zu dem Gehäuse (2) beweglichen Bauteils des Hochdruckreinigers (1) vorgesehen ist.

14. Hochdruckeiniger nach Anspruch 13,
**dadurch gekennzeichnet, dass** das Bauteil mittels eines Dämpfungselements (7) gegenüber dem Gehäuse (2) elastisch gelagert ist.

15. Hochdruckreiniger nach Anspruch 13 oder 14,
**dadurch gekennzeichnet, dass** das Bauteil eine Pumpe (5) mit einem Motor ist, dass das Betätigungselement (20) zur Betätigung einer Druckregulierung der Pumpe (5) vorgesehen ist, und dass das Betätigungselement (20) an der Pumpe (5) angeordnet ist.

16. Verfahren zur Montage eines Hochdruckreinigers nach einem der Ansprüche 7 bis 12 oder 13 bis 15, wenn von Anspruch 7 abhängig, wobei die Baugruppe (60) aus Bedienelement (10) und Verbindungsstück (30) zunächst im Montagezustand (62) durch eine Öffnung (6) im Gehäuse (2) des Hochdruckreinigers (1) gesteckt wird, wobei anschließend das Verbindungsstück (30) der Baugruppe (60) bei Führung der Baugruppe (60) über das Bedienelement (10) in das Betätigungselement (20) gesteckt wird, wobei dann das Bedienelement (10) gegen das sich am Betätigungselement (20) abstützende Verbindungsstück (30) gedrückt wird, so dass hierbei die Baugruppe (60) vom Montagezustand (62) in den Einsatzzustand (61) überführt wird, und wobei abschließend das Bedienelement (10) an dem Gehäuse (2) des Hochdruckreinigers (1) festgelegt wird.

## Claims

1. High-pressure cleaner having an operating element (10) which is arranged in a rotatable manner on a housing (2) of the high-pressure cleaner (1) and which serves for operation of an actuating element (20) which is rotatable about an actuating axis of rotation (50), **characterized in that** the operating element (10) and the actuating element (20) are connected in a rotationally conjoint manner to one another via at least one universal joint (3, 4), and **in that** the at least one universal joint (3, 4) permits movement of the actuating element (20) relative to the operating element (10) in the direction of the actuating axis of rotation (50).

2. High-pressure cleaner according to Claim 1,
**characterized in that** the operating element (10) and the actuating element (20) are arranged at a distance (d) from one another, said distance being measured in the direction of the operating axis of rotation (40), and **in that** the operating element (10) and the actuating element (20) are connected in a rotationally conjoint manner to one another via two universal joints (3, 4).

3. High-pressure cleaner according to Claim 2,
**characterized in that** a connecting piece (30) is arranged between the operating element (10) and the actuating element (20), **in that** the two universal joints (3, 4) are a first universal joint (3) and a second universal joint (4), **in that** the first universal joint (3) is formed between the operating element (10) and the connecting piece (30), and **in that** the second universal joint (4) is formed between the actuating element (20) and the connecting piece (30).

4. High-pressure cleaner according to Claim 3,
**characterized in that** the connecting piece (30) has two operating joint pins (31, 32), and **in that**, for each operating joint pin (31, 32), the operating element (10) has at least one operating receiving slot (11, 12, 13, 14) which is open towards the actuating element (20) in the direction of the actuating axis of rotation (50) and which serves for receiving the respective operating joint pin (31, 32).

5. High-pressure cleaner according to Claim 3 or 4,
**characterized in that** the connecting piece (30) has two actuating joint pins (33, 34), and **in that**, for each actuating joint pin (33, 34), the actuating element (20) has at least one actuating receiving slot (21, 22, 23, 24) which is open towards the operating element (10) in the direction of the actuating axis of rotation (50) and which serves for receiving the respective actuating joint pin (33, 34).

6. High-pressure cleaner according to Claim 5,
**characterized in that** the operating element (10) and the actuating element (30) are spaced apart from one another in such a way that the connecting piece (30) is held between the operating element (10) and the actuating element (30) by virtue of the operating joint pins (31, 32) being arranged within the operating receiving slots (11, 12, 13, 14) and by virtue of the actuating joint pins (33, 34) being arranged within the actuating receiving slots (21, 22, 23, 24).

7. High-pressure cleaner according to one of Claims 3 to 6,
**characterized in that** the operating element (10) and the connecting piece (30) form a subassembly (60), **in that** the subassembly (60) has a usage state (61), in which the operating element (10) and the connecting piece (30) are movable in relation to one another, **in that** the subassembly (60) has a fitted state (62), in which the first universal joint (3) is arrested between the operating element (10) and the connecting piece (30) by means of a releasable latching connection (63).

8. High-pressure cleaner according to Claim 7,
**characterized in that**, in the fitted state (62), the subassembly (60) is arrested in such a way that the operating axis of rotation (40) of the operating element (10) and a longitudinal axis (39) along which the connecting piece (30) extends are coaxial with one another.

9. High-pressure cleaner according to Claim 7 or 8,
**characterized in that** the first universal joint (3) has two operating pivot axes (51, 52), each of which extends through one of the two operating joint pins (31, 32), and **in that**, in the fitted state (62), the latching connection (63) prevents the connecting piece (30) from being pivoted about the two operating pivot axes (51, 52) of the first universal joint (3) in relation to the operating element (10).

10. High-pressure cleaner according to one of Claims 7 to 9,
**characterized in that** the latching connection (63) consists of a first arresting means (15) on the operating element (10) and a second arresting means (35) on the connecting piece (30).

11. High-pressure cleaner according to Claim 10,
**characterized in that** the first arresting means (15) is projections (16, 18) on the edge (17, 19) of the operating receiving slots (11, 12, 13, 14), between which projections, in the fitted state (62), the second arresting means (35), in the form of engagement projections (36), of the connecting piece (30) is held in a clamped manner.

12. High-pressure cleaner according to one of Claims 7 to 11,
**characterized in that** the latching connection (63) has such elasticity that the subassembly (60) is transferable from the fitted state (62) into the usage state (61) by virtue of the operating element (10) being pushed onto the connecting piece (30) in the direction of the operating axis of rotation (40).

13. High-pressure cleaner according to one of Claims 1 to 12,
**characterized in that** the actuating element (20) is intended for actuating a component of the high-pressure cleaner (1) that is movable relative to the housing (2).

14. High-pressure cleaner according to Claim 13,
**characterized in that** the component is mounted elastically in relation to the housing (2) by means of a damping element (7).

15. High-pressure cleaner according to Claim 13 or 14,
**characterized in that** the component is a pump (5) with a motor, **in that** the actuating element (20) is intended for actuating a pressure regulation means of the pump (5), and **in that** the actuating element (20) is arranged on the pump (5).

16. Method for assembling a high-pressure cleaner according to one of Claims 7 to 12 or 13 to 15, where dependent on Claim 7, wherein firstly the subassembly (60) composed of operating element (10) and connecting piece (30) is plugged in the fitted state (62) through an opening (6) in the housing (2) of the high-pressure cleaner (1), wherein subsequently the connecting piece (30) of the subassembly (60) is plugged into the actuating element (20) while guiding the subassembly (60) via the operating element (10), wherein then the operating element (10) is pushed against the connecting piece (30), which is supported on the actuating element (20), such that, in the process, the subassembly (60) is transferred from the fitted state (62) into the usage state (61), and wherein finally the operating element (10) is secured on the housing (2) of the high-pressure cleaner (1).

## Revendications

1. Nettoyeur haute pression avec un élément de commande (10) agencé de manière rotative sur un boîtier (2) du nettoyeur haute pression (1) pour la commande d'un élément d'actionnement (20) pouvant tourner autour d'un axe de rotation d'actionnement (50), **caractérisé en ce que** l'élément de commande (10) et l'élément d'actionnement (20) sont reliés l'un à l'autre de manière solidaire en rotation par l'intermédiaire d'au moins une articulation en croix (3, 4), et **en ce que** l'au moins une articulation en croix (3, 4) permet un mouvement de l'élément d'actionnement (20) par rapport à l'élément de commande (10) dans la direction de l'axe de rotation d'actionnement (50).

2. Nettoyeur haute pression selon la revendication 1,
**caractérisé en ce que** l'élément de commande (10) et l'élément d'actionnement (20) sont agencés à une distance (d) l'un de l'autre mesurée dans la direction de l'axe de rotation de commande (40), et **en ce que** l'élément de commande (10) et l'élément d'actionnement (20) sont reliés l'un à l'autre de manière solidaire en rotation par l'intermédiaire de deux articulations en croix (3, 4).

3. Nettoyeur haute pression selon la revendication 2,
**caractérisé en ce qu'**une pièce de liaison (30) est agencée entre l'élément de commande (10) et l'élément d'actionnement (20), **en ce que** les deux articulations en croix (3, 4) sont une première articulation en croix (3) et une deuxième articulation en croix (4), **en ce que** la première articulation en croix (3) est réalisée entre l'élément de commande (10) et la pièce de liaison (30), et **en ce que** la deuxième articulation en croix (4) est réalisée entre l'élément d'actionnement (20) et la pièce de liaison (30).

4. Nettoyeur haute pression selon la revendication 3,
**caractérisé en ce que** la pièce de liaison (30) présente deux pivots de commande (31, 32), et **en ce que** l'élément de commande (10) présente pour chaque pivot de commande (31, 32) au moins une fente de réception de commande (11, 12, 13, 14) ouverte dans la direction de l'axe de rotation de commande (50) vers l'élément de commande (20) pour recevoir le pivot de commande (31, 32) respectif.

5. Nettoyeur haute pression selon la revendication 3 ou 4,
**caractérisé en ce que** la pièce de liaison (30) présente deux pivots d'actionnement (33, 34), et **en ce que** l'élément d'actionnement (20) présente pour chaque pivot d'actionnement (33, 34) au moins une fente de réception d'actionnement (21, 22, 23, 24) ouverte en direction de l'axe de rotation d'actionnement (50) vers l'élément de commande (10) pour recevoir le pivot d'actionnement respectif (33, 34).

6. Nettoyeur haute pression selon la revendication 5,
**caractérisé en ce que** l'élément de commande (10) et l'élément d'actionnement (30) sont espacés l'un de l'autre de telle sorte que la pièce de liaison (30) est maintenue entre l'élément de commande (10) et l'élément d'actionnement (30) par le fait que les pivots de commande (31, 32) sont agencés à l'intérieur des fentes de réception de commande (11, 12, 13, 14), et que les pivots d'actionnement (33, 34) sont agencés à l'intérieur des fentes de réception de commande (21, 22, 23, 24).

7. Nettoyeur haute pression selon l'une quelconque des revendications 3 à 6,
**caractérisé en ce que** l'élément de commande (10) et la pièce de liaison (30) forment un ensemble (60), **en ce que** l'ensemble (60) présente un état d'utilisation (61) dans lequel l'élément de commande (10) et la pièce de liaison (30) sont mobiles l'un par rapport à l'autre, **en ce que** l'ensemble (60) possède un état de montage (62) dans lequel la première articulation en croix (3) est bloquée au moyen d'une liaison par encliquetage (63) amovible entre l'élément de commande (10) et la pièce de liaison (30).

8. Nettoyeur haute pression selon la revendication 7,
**caractérisé en ce que** l'ensemble (60) est bloqué dans l'état de montage (62) de telle sorte que l'axe de rotation de commande (40) de l'élément de commande (10) et un axe longitudinal (39), le long duquel s'étend la pièce de liaison (30), sont coaxiaux.

9. Nettoyeur haute pression selon la revendication 7 ou 8,
**caractérisé en ce que** la première articulation en croix (3) présente deux axes de pivotement de commande (51, 52) qui passent chacun par l'un des deux pivots de commande (31, 32), et **en ce que** la liaison par encliquetage (63) empêche, à l'état de montage (62), un pivotement de la pièce de liaison (30) par rapport à l'élément de commande (10) autour des deux axes de pivotement de commande (51, 52) de la première articulation en croix (3).

10. Nettoyeur haute pression selon l'une quelconque des revendications 7 à 9,
**caractérisé en ce que** la liaison par encliquetage (63) est constituée d'un premier moyen de blocage (15) sur l'élément de commande (10) et d'un deuxième moyen de blocage (35) sur la pièce de liaison (30).

11. Nettoyeur haute pression selon la revendication 10,
**caractérisé en ce que** le premier moyen de blocage (15) est constitué de saillies (16, 18) sur le bord (17, 19) des fentes de réception de commande (11, 12, 13, 14), entre lesquelles le deuxième moyen de blocage (35) de la pièce de liaison (30), réalisé sous forme de saillies d'engagement (36), est maintenu serré à l'état de montage (62).

12. Nettoyeur haute pression selon l'une quelconque des revendications 7 à 11, **caractérisé en ce que** la liaison par encliquetage (63) est élastique de telle sorte que l'ensemble (60) peut être transféré de l'état de montage (62) à l'état d'utilisation (61) en poussant l'élément de commande (10) dans la direction de l'axe de rotation de commande (40) sur la pièce de liaison (30).

13. Nettoyeur haute pression selon l'une quelconque des revendications 1 à 12, **caractérisé en ce que** l'élément d'actionnement (20) est prévu pour actionner un composant du nettoyeur haute pression (1) qui est mobile par rapport au boîtier (2).

14. Nettoyeur haute pression selon la revendication 13,
**caractérisé en ce que** le composant est supporté de manière élastique par rapport au boîtier (2) au moyen d'un élément d'amortissement (7).

15. Nettoyeur haute pression selon la revendication 13 ou 14,
**caractérisé en ce que** le composant est une pompe (5) avec un moteur, **en ce que** l'élément d'actionnement (20) est prévu pour actionner une régulation de pression de la pompe (5), et **en ce que** l'élément d'actionnement (20) est agencé sur la pompe (5).

16. Procédé de montage d'un nettoyeur haute pression selon l'une quelconque des revendications 7 à 12 ou 13 à 15, lorsqu'elles dépendent de la revendication 7, dans lequel l'ensemble (60) constitué de l'élément de commande (10) et de la pièce de liaison (30) est tout d'abord inséré à l'état de montage (62) à travers une ouverture (6) dans le boîtier (2) du nettoyeur haute pression (1), la pièce de liaison (30) de l'ensemble (60) étant ensuite insérée dans l'élément d'actionnement (20) lors du guidage de l'ensemble (60) par l'élément de commande (10), l'élément de commande (10) étant ensuite pressé contre la pièce de liaison (30) s'appuyant sur l'élément d'actionnement (20), de telle sorte que l'ensemble (60) passe de l'état de montage (62) à l'état d'utilisation (61), et l'élément de commande (10) étant finalement fixé sur le boîtier (2) du nettoyeur haute pression (1).
